# EUROPEAN PATENT SPECIFICATION

(11) **EP 3 113 937 B1**
(45) Date of publication and mention of the grant of the patent: **28.02.2018**
(21) Application number: 15707648.0
(22) Date of filing: 04.03.2015
(51) Int. Cl.: B29D 11/00, B29C 33/72, G02B 1/04, B29L 11/00, B29C 39/00, B29K 83/00

(54) **IMPROVED CLEANING METHOD FOR MOLDS USED IN THE MANUFACTURING OF SILICONE HYDROGEL CONTACT LENSES**
VERBESSERTES VERFAHREN ZUR REINIGUNG VON FORMEN FÜR DIE HERSTELLUNG VON SILIKON-HYDROGEL-KONTAKTLINSEN
PROCÉDÉ DE NETTOYAGE AMÉLIORÉ POUR MOULES UTILISÉS DANS LA FABRICATION DE LENTILLES DE CONTACT EN HYDROGEL DE SILICONE

(30) Priority: 06.03.2014 US 201461948812 P
(43) Date of publication of application: 11.01.2017
(73) Proprietor: Novartis AG, 4056 Basel (CH)
(72) Inventor: BOTHE, Harald, 65527 Niedernhausen (DE); TRETTER, Michael, 63739 Aschaffenburg (DE); HAGMANN, Peter, 88289 Waldburg (DE)
(74) Representative: Bohest AG
(86) International application number: PCT/EP2015/054456
(87) International publication number: WO 2015/132277

(56) References cited:
- WO-A1-2012/078457
- US-A1- 2010 140 114

## Description

The present invention is related to an improved method for making silicone hydrogel contact lenses, in particular, a method for in-line cleaning of reusable molds for making silicone hydrogel contact lenses under spatial limitation of actinic radiation.

### BACKGROUND

In recent years, soft silicone hydrogel contact lenses become more and more popular because of their high oxygen permeability and comfort. However, all commercially available silicone hydrogel contact lenses are produced according to a conventional cast molding technique involving use of disposable plastic molds and a mixture of monomers in the presence or absence of macromers. However, disposable plastic molds inherently have unavoidable dimensional variations, because, during injection-molding of plastic molds, fluctuations in the dimensions of molds can occur as a result of fluctuations in the production process (temperatures, pressures, material properties), and also because the resultant molds may undergo non-uniformly shrinking after the injection molding. These dimensional changes in the mold may lead to fluctuations in the parameters of contact lenses to be produced (peak refractive index, diameter, basic curve, central thickness etc.) and to a low fidelity in duplicating complex lens design.

Such disadvantages encountered in a conventional cast-molding technique can be overcome by using the so-called Lightstream Technology™ (CIBA Vision), as illustrated in U.S. Patent Nos. 5,508,317, 5,789,464, 5,849,810, and 6,800,225, which are incorporated by reference in their entireties. The Lightstream Technology™ involves (1) a lens-forming composition which is typically a solution of one or more substantially purified prepolymer with ethylenically unsaturated groups and which generally is substantially free of monomers and crosslinking agents with a small molecular weight, (2) reusable molds produced in high precision, (3) curing under a spatial limitation of actinic radiation (e.g., UV); and washing and reusing the reusable molds. Lenses produced according to the Lightstream Technology™ can have high consistency and high fidelity to the original lens design, because of use of reusable, high precision molds. In addition, contact lenses with high quality can be produced at relatively lower cost due to the short curing time and a high production yield.

But, the Lightstream Technology™ has not been applied to make silicone hydrogel contact lenses. One potential issue in the manufacture of silicone hydrogel contact lenses based on Lightstream Technology™ is that the silicone-containing components of a lens formulation left behind on the mold surface may not be water soluble and an organic solvent may have to be used to wash the reusable molds. However, use of organic solvents can be costly and is not environmentally friendly. A water-based mold washing system is desirable. WO2012/078457 discloses such a system wherein an ethoxylated water-soluble silicone surfactant is suggested. These surfactants tend to have a high foaming property and therefore preferably require the additional use of a defoamer.

Therefore, there is still a need for an improved method for washing, with a water-based system, reusable molds for making silicone hydrogel contact lenses according to the Lightstream Technology™.

### SUMMARY OF THE INVENTION

In one aspect, the invention provides a method for producing silicone hydrogel contact lenses, involving use of a reusable mold for cast-molding silicone hydrogel contact lenses and a step of cleaning/washing the reusable mold with a water-based solution containing a solvo-surfactant, wherein the solvo-surfactant is an alkyl (propylene glycol)ₙ ether wherein alkyl is a linear alkyl group having 2 to 5 carbon atoms and n is the integer 1, 2 or 3.

### DETAILED DESCRIPTION OF EMBODIMENTS OF THE INVENTION

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well known and commonly employed in the art.

"Contact Lens" refers to a structure that can be placed on or within a wearer's eye. A contact lens can correct, improve, or alter a user's eyesight, but that need not be the case. A contact lens can be of any appropriate material known in the art or later developed, and can be a soft lens, a hard lens, or a hybrid lens. A "silicone hydrogel contact lens" refers to a contact lens comprising a silicone hydrogel material.

A "hydrogel" or "hydrogel material" refers to a polymeric material which can absorb at least 10 percent by weight of water when it is fully hydrated.

A "silicone hydrogel" refers to a silicone-containing hydrogel obtained by copolymerization of a polymerizable composition comprising at least one silicone-containing monomer or at least one silicone-containing macromer or at least one crosslinkable silicone-containing prepolymer.

"Hydrophilic," as used herein, describes a material or portion thereof that will more readily associate with water than with lipids.

A "vinylic monomer" refers to a low molecular weight compound that has one sole ethylenically unsaturated group. Low molecular weight typically means average molecular weights less than 700 Daltons.

The term "olefinically unsaturated group" or "ethylenicaly unsaturated group" is employed herein in a broad sense and is intended to encompass any groups containing a >C=C< group. Exemplary ethylenically unsaturated groups include without limitation acryloyl, methacryloyl, allyl, vinyl, styrenyl, or other C=C containing groups.

The term "(meth)acrylamide" refers to methacrylamide and/or acrylamide.

The term "(meth)acrylate" refers to methacrylate and/or acrylate.

As used herein, "actinically" in reference to curing, crosslinking or polymerizing of a polymerizable composition, a prepolymer or a material means that the curing (e.g., crosslinked and/or polymerized) is performed by actinic irradiation, such as, for example, UV irradiation, ionizing radiation (e.g. gamma ray or X-ray irradiation), microwave irradiation, and the like. Thermal curing or actinic curing methods are well-known to a person skilled in the art.

A "polysiloxane-containing vinylic monomer or macromer" refers to a vinylic monomer or macromer containing one sole ethylenically unsaturated group and a divalent radical of linear segment 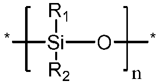 in which R₁ and R₂ are independently a monovalent C₁-C₁₀ alkyl, a monovalent C₁-C₁₀ aminoalkyl, a monovalent of C₁-C₁₀ hydroxyalkyl, C₁-C₁₀ ether, C₁-C₁₀ fluoroalkyl, C₁-C₁₀ fluoroether or C₆-C₁₈ aryl radical,-alk-(OCH₂CH₂)ₘ-OR₃, in which alk is C₁-C₆ alkylene divalent radical, R₃ is hydrogen or C₁-C₆ alkyl, and m is an integer of from 1 to 10; n is an integer of 2 or higher.

A "siloxane-containing vinylic monomer" refers to a vinylic monomer that comprises one sole ethylenically-unsaturated group and a radical of 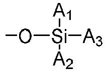 in which A₁, A₂ and A₃ independent of each other are C₁-C₁₂ alkyl which is linear or branched and optionally substituted or terminated with C1-C4 alkoxy, hydroxyl, or amino group, phenyl, or benzyl.

The term "fluid" as used herein indicates that a material is capable of flowing like a liquid.

A "hydrophilic vinylic monomer", as used herein, refers to a vinylic monomer which as a homopolymer typically yields a polymer that is water-soluble or can absorb at least 10 percent by weight water.

A "hydrophobic vinylic monomer", as used herein, refers to a vinylic monomer which as a homopolymer typically yields a polymer that is insoluble in water and can absorb less than 10 percent by weight water.

A "vinylic macromer" refers to a medium and high molecular weight compound which comprises one sole ethylenically unsaturated groups. Medium and high molecular weight typically means average molecular weights greater than 700 Daltons.

A "prepolymer" refers to a starting polymer which contains two or more ethylenically unsaturated groups and can be cured (e.g., crosslinked) actinically to obtain a crosslinked polymer having a molecular weight much higher than the starting polymer.

A "silicone-containing prepolymer" refers to a prepolymer which contains silicone.

A "crosslinker" refers to a compound having at least two ethylenically-unsaturated groups. A "crossliking agent" refers to a compound which belongs to a subclass of crosslinkers and comprises at least two ethylenically unsaturated groups and has a molecular weight of 700 Daltons or less.

"Molecular weight" of a polymeric material (including monomeric or macromeric materials), as used herein, refers to the weight-average molecular weight unless otherwise specifically noted or unless testing conditions indicate otherwise.

"Polymer" means a material formed by polymerizing one or more monomers. As used herein, the term "ethylenically functionalized" in reference to a copolymer or a compound is intended to describe that one or more actinically crosslinkable groups have been covalently attached to a copolymer or compound through the pendant or terminal functional groups of the copolymer or the compound according to a coupling process.

As used herein, the term "multiple" refers to three or more.

A "spatial limitation of actinic radiation" refers to an act or process in which energy radiation in the form of rays is directed by, for example, a mask or screen or combinations thereof, to impinge, in a spatially restricted manner, onto an area having a well defined peripheral boundary. A spatial limitation of UV radiation is obtained by using a mask or screen having a radiation (e.g.,UV) permeable region, a radiation (e.g., UV) impermeable region surrounding the radiation-permeable region, and a projection contour which is the boundary between the radiation-impermeable and radiation-permeable regions, as schematically illustrated in the drawings of U.S. Patent Nos. 6,800,225 (Figs. 1-11), and 6,627,124 (Figs. 1-9), 7,384,590 (Figs. 1-6), and 7,387,759 (Figs. 1-6), all of which are incorporated by reference in their entireties. The mask or screen allows to spatially projects a beam of radiation (e.g., UV radiation) having a cross-sectional profile defined by the projection contour of the mask or screen. The projected beam of radiation (e.g., UV radiation) limits radiation (e.g., UV radiation) impinging on a lens-forming material located in the path of the projected beam from the first molding surface to the second molding surface of a mold. The resultant contact lens comprises an anterior surface defined by the first molding surface, an opposite posterior surface defined by the second molding surface, and a lens edge defined by the sectional profile of the projected UV beam (i.e., a spatial limitation of radiation). The radiation used for the crosslinking is a radiation energy, especially UV radiation, gamma radiation, electron radiation or thermal radiation, the radiation energy preferably being in the form of a substantially parallel beam in order on the one hand to achieve good restriction and on the other hand efficient use of the energy.

In the conventional cast-molding process, the first and second molding surface of a mold are pressed against each other to form a circumferential contact line which defines the edge of a result contact lens. Because the close contact of the molding surfaces can damage the optical quality of the molding surfaces, the mold cannot be reused. In contrast, in the Lightstream Technology™, the edge of a resultant contact lens is not defined by the contact of the molding surfaces of a mold, but instead by a spatial limitation of radiation. Without any contact between the molding surfaces of a mold, the mold can be used repeatedly to produce high quality contact lenses with high reproducibility.

A prerequisite that molds can be re-usable is that they have equivalent and reproducible clean surface properties in each production cycle. Especially the cleaning of molds utilized for the production of silicon hydrogel contact lenses by the Lightstream Technology™ is very challenging. The molds are made of glass and quartz, i.e. have a high surface energy and are therefore easily soiled by the silicon compounds with their low surface energy utilized for the lens production.

The silicon compounds could be cleaned off easily in laboratory by organic solvents like 2-propanol. But for a high mass - production process like the Lightstream Technology™ an organic solvent based cleaning process is difficult to realize. Safety, environmental and consumption aspects in combination with high process times needed for solvent removal and rinsing prevents such an application. Therefore a water based cleaning process is seen as optimal for such a process.

Cleaning with pure water is possible in principle. By such a process the soil is removed simply by the mechanical impact of a high pressure water jet. The cleaning rate by this process is low and usually a thin layer of soil remains on the molds after cleaning. The soil layer becomes insoluble with increasing number or production cycles and causes in this form irreversible imprints in the lenses, i.e. contact lenses so produced need to be rejected. In order to prevent such rejects it is necessary to clean / polish the molds rigorously periodically off-line in a cost- and time consuming process.

However, the problem is larger than being only related to the molds. The problem pertains to the complete cleaning system including the total volume of the cleaning solutions and all surfaces of the cleaning system. The reason is in the fact that the silicon containing soil removed from the mold by the water jet is not or almost not water soluble and precipitates in the cleaning solutions and after agglomeration sticks on the wall of the cleaning chamber, of tubes, etc. and re-soils the molds again. It is therefore necessary to prevent a re-soiling. With use of water alone the avoidance of re-soiling can only be solved in that the soiled water is diluted with huge amounts of water as cleaning and rinsing agent. But this process causes a high consumption of water and makes it therefore unfavorable for mass production.

A more recent approach according to WO2012/078457 is to use ethoxylated water-soluble silicone polyether surfactants, however these surfactants tend to foam and use of defoamers is preferably required. Overall they do not have a balanced set of properties for the desired purpose.

Therefore there still exists a need for a water based cleaning process with a cleaning solution which
- dissolves or emulgates the soil, i.e. keeps it in a liquid state, in other words has a high soil carrying capacity (in German: "Schmutztragevermogen")
- operates well with the preferred cleaning technology, i.e. for a spray cleaning technology any foam generation is not allowed,
- is able to clean-off the soil in a short process time
- keeps its cleaning performance also in the presence of dissolved/emulgated soil,
- is easily rinsed-off from the molds by water,
- is not or less toxic
- is not or not heavily flammable, even not as an aerosol during spraying, i.e. has at least a water content higher than 80% and surface active additives with a flash point higher than 65°C.

Surprisingly it was found, after having tested a large number of potential additives, see examples, that aqueous solutions of solvo-surfactants which are an alkyl (propylene glycol)ₙ ether wherein alkyl is a linear alkyl group having 2 to 5 carbon atoms and n is the integer 1, 2 or 3 are very well suitable to solve the existing problem. In particular some Dowanol products are very well suitable, such as Dowanol PnB, a compound as defined wherein alkyl is n-butyl and n is 1, also named propyleneglycol-n-butylether, or Dowanol PnP, a compound as defined wherein alkyl is n-propyl and n is 1, also named propyleneglycol-n-propylether or Dowanol DPnB, a compound as defined wherein alkyl is n-butyl and n is 2 also named dipropyleneglycol-n-butylether, the latter being most preferred.

In general, the invention is directed to a method for making silicone hydrogel contact lenses based on the Lightstream Technology™. The invention is partly based on the discovery that solvo-surfactants which are an alkyl (propylene glycol)ₙ ether wherein alkyl is a linear alkyl group having 2 to 5 carbon atoms and n is the integer 1, 2 or 3 can be used as a surfactant in a water-based solution to effectively clean/wash reusable molds involved in cast-molding of silicone hydrogel contact lenses. It is believed that a solvo-surfactant can facilitate the dissolution of silicone-containing components of a silicone hydrogel lens formulation in water and/or fine dispersion of such silicone-containing component in water.

The invention provides a method for producing silicone hydrogel contact lenses. The method comprises the steps of: (1) providing a reusable mold for making soft contact lenses, wherein the mold has a first mold half with a first molding surface defining the anterior surface of a contact lens and a second mold half with a second molding surface defining the posterior surface of the contact lens, wherein said first and second mold halves are configured to receive each other such that a cavity is formed between said first and second molding surfaces; (2) introduce a fluid polymerizable composition into the cavity, wherein the fluid polymerizable composition comprises at least one silicone-containing lens-forming material selected from the group consisting of a siloxane-containing vinylic monomer, a polysiloxane-containing vinylic monomer, a polysiloxane-containing macromer, a polysiloxane-containing crosslinker, an actinically-crosslinkable silicone-containing prepolymer, and a mixture thereof; (3) irradiating, under a spatial limitation of actinic radiation, the fluid composition in the mold for a time period of about 200 seconds or less, so as to form a silicone hydrogel contact lens, wherein the formed silicone hydrogel contact lens comprises an anterior surface defined by the first molding surface, an opposite posterior surface defined by the second molding surface, and a lens edge defined by the spatial limitation of actinic radiation; (4) opening the mold and removing the formed silicone hydrogel contact lens from the mold; (5) removing the silicone-containing lens forming material and other components of the fluid composition left behind on the first and second molding surfaces of the mold by washing the first and second molding surfaces of the reusable mold with a water-based solution containing from about 0.01% to about 10% by weight of a solvo-surfactant wherein the solvo-surfactant is an alkyl (propylene glycol)ₙ ether wherein alkyl is a linear alkyl group having 2 to 5 carbon atoms and n is the integer 1, 2 or 3; and (6) repeating the steps (2) to (5).

Examples of reusable molds suitable for spatial limitation of radiation include without limitation those disclosed in U.S. Patent Nos. 6,800,225, 6,627,124, 7,384,590, and 7,387,759, which are incorporated by reference in their entireties.

For example, a preferred reusable mold comprises a first mold half having a first molding surface and a second mold half having a second molding surface. The two mold halves of the preferred reusable mold are not touching each other, but there is a thin gap of annular design arranged between the two mold halves. The gap is connected to the mold cavity formed between the first and second molding surfaces, so that excess monomer mixture can flow into the gap. It is understood that gaps with any design can be used in the invention.

In a preferred embodiment, at least one of the first and second molding surfaces is permeable to a crosslinking radiation, e.g., UV radiation). More preferably, one of the first and second molding surfaces is permeable to a crosslinking radiation (e.g., UV radiation) while the other molding surface is poorly permeable to the crosslinking radiation (e.g., UV radiation). For example, one of the mold halves can be made of a UV-permeable material, while the other mold half can be made of a material containing UV absorbing materials, such as, for example carbon black, as described in U.S. Patent Nos. 7,387,759 and 7,384,590.

The reusable mold preferably comprises a mask which is fixed, constructed or arranged in, at or on the mold half having the radiation-permeable molding surface. The mask is impermeable or at least of poor permeability compared with the permeability of the radiation-permeable molding surface. The mask extends inwardly right up to the mold cavity and surrounds the mold cavity so as to screen all areas behind the mask with the exception of the mold cavity.

Where the curing radiation is UV light, the mask may preferably be a thin chromium layer, which can be produced according to processes as known, for example, in photo and UV lithography. Other metals or metal oxides may also be suitable mask materials. The mask can also be coated with a protective layer, for example of silicon dioxide if the material used for the mould or mould half is quartz.

Alternatively, the mask can be a masking collar made of a material comprising a UV-absorber and substantially blocks curing energy therethrough as described in U.S. Patent No. 7,387,759 (incorporated by reference in its entirety). In this preferred embodiment, the mold half with the mask comprises a generally circular disc-shaped transmissive portion and a masking collar having an inner diameter adapted to fit in close engagement with the transmissive portion, wherein said transmissive portion is made from an optically clear material and allows passage of curing energy therethrough, and wherein the masking collar is made from a material comprising a UV-blocker and substantially blocks passage of curing energy therethrough, wherein the masking collar generally resembles a washer or a doughnut, with a center hole for receiving the transmissive portion, wherein the transmissive portion is pressed into the center opening of the masking collar and the masking collar is mounted within a bushing sleeve.

Reusable molds can be made of quartz, glass, sapphire, CaF₂, a cyclic olefin copolymer (such as for example, Topas® COC grade 8007-S10 (clear amorphous copolymer of ethylene and norbornene) from Ticona GmbH of Frankfurt, Germany and Summit, New Jersey, Zeonex® and Zeonor® from Zeon Chemicals LP, Louisville, KY), polymethylmethacrylate (PMMA), polyoxymethylene from DuPont (Delrin), UItem® (polyetherimide) from G.E. Plastics, PrimoSpire®, etc.. Because of the reusability of the mold halves, a relatively high outlay can be expended at the time of their production in order to obtain molds of extremely high precision and reproducibility. Since the mold halves do not touch each other in the region of the lens to be produced, i.e. the cavity or actual molding surfaces, damage as a result of contact is ruled out. This ensures a high service life of the molds, which, in particular, also ensures high reproducibility of the contact lenses to be produced and high fidelity to the lens design.

Any suitable siloxane-containing vinylic monomers can be used in the invention. Examples of preferred siloxane-containing vinylic monomers include without limitation N-[tris(trimethylsiloxy)silylpropyl] (meth)acrylamide, N-[tris(dimethylpropylsiloxy)silylpropyl] (meth)acrylamide, N-[tris(dimethylphenylsiloxy)silylpropyl] acrylamide, N-[tris(dimethyl-phenylsiloxy)silylpropyl] (meth)acrylamide, N-[tris(dimethylethylsiloxy)silylpropyl] (meth)-acrylamide, N-(2-hydroxy-3-(3-(bis(trimethylsilyloxy)methylsilyl)propyloxy)propyl)-2- methyl acrylamide; N-(2-hydroxy-3-(3-(bis(trimethylsilyloxy)methylsilyl)propyloxy)propyl) acrylamide; N,N-bis[2-hydroxy-3-(3-(bis(trimethylsilyloxy)methylsilyl)propyloxy)propyl]-2-methyl acrylamide; N,N-bis[2-hydroxy-3-(3-(bis(trimethylsilyloxy)methylsilyl)propyloxy)propyl] acrylamide; N-(2-hydroxy-3-(3-(tris(trimethylsilyloxy)silyl)propyloxy)propyl)-2-methyl acrylamide; N-(2-hydroxy-3-(3-(tris(trimethylsilyloxy)silyl)propyloxy)propyl)acrylamide; N,N-bis[2-hydroxy-3-(3-(tris(trimethylsilyloxy)silyl)propyloxy)propyl]-2-methyl acrylamide; N,N-bis[2-hydroxy-3-(3-(tris(trimethylsilyloxy)silyl)propyloxy)propyl]acrylamide; N-[2-hydroxy-3-(3-(t-butyldimethylsilyl)propyloxy)propyl]-2-methyl acrylamide; N-[2-hydroxy-3-(3-(t-butyldimethylsilyl)propyloxy)propyl]acrylamide; N,N-bis[2-hydroxy-3-(3-(t-butyldimethylsilyl)-propyloxy)propyl]-2-methyl acrylamide; N,N-bis[2-hydroxy-3-(3-(t-butyldimethylsilyl)propyl-oxy)propyl]acrylamide; 3-methacryloxy propylpentamethyldisiloxane, tris(trimethylsilyloxy)-silylpropyl (meth)acrylate, (3-methacryloxy-2-hydroxypropyloxy)propylbis(trimethylsiloxy)-methylsilane), (3-methacryloxy-2-hydroxypropyloxy)propyltris(trimethylsiloxy)silane, 3-methacryloxy-2-(2-hydroxyethoxy)-propyloxy)propylbis(trimethylsiloxy)methylsilane, N-2-methacryloxyethyl-O-(methyl-bis-trimethylsiloxy-3-propyl)silyl carbamate, 3-(trimethylsilyl)-propylvinyl carbonate, 3-(vinyloxycarbonylthio)propyl-tris(trimethyl-siloxy)silane, 3-[tris-(trimethylsiloxy)silyl]propylvinyl carbamate, 3-[tris(trimethylsiloxy)silyl] propyl allyl carbamate, 3-[tris(trimethylsiloxy)silyl]propyl vinyl carbonate, t-butyldimethyl-siloxyethyl vinyl carbonate; trimethylsilylethyl vinyl carbonate, trimethylsilylmethyl vinyl carbonate; and combinations thereof. Most preferred siloxane-containing (meth)acrylamide monomers are N-[tris(trimethylsiloxy)silylpropyl]acrylamide, tris(trimethylsilyloxy)silylpropyl (meth)acrylate, N-[tris(trimethylsiloxy)silylpropyl] (meth)acrylamide, 3-methacryloxy-2-hydroxypropyl-oxy)propyl-bis(trimethylsiloxy)methylsilane, or combinations thereof.

Any suitable polysiloxane-containing vinylic macromers and crosslinkers can be used in the invention. Examples of preferred polysiloxane-containing vinylic monomers or macromers and polysiloxane-containing crosslinkers include without limitation mono(meth)-acrylate-terminated polydimethylsiloxanes of various molecular weight (e.g., mono-3-methacryloxypropyl terminated, mono-butyl terminated polydimethylsiloxane or mono-(3-methacryloxy-2-hydroxypropyloxy)propyl terminated, mono-butyl terminated polydimethylsiloxane); mono-vinyl-terminated, mono-vinyl carbonate-terminated or mono-vinyl carbamate-terminated polydimethylsiloxanes of various molecular weight; di-(meth)acrylated polydimethylsiloxanes (or so called polysiloxane crosslinkers) of various molecular weight; di-vinyl carbonate-terminated polydimethylsiloxanes (polysiloxane crosslinkers); di-vinyl carbamate-terminated polydimethylsiloxane (polysiloxane crosslinkers); di-vinyl terminated polydimethylsiloxanes (polysiloxane crosslinkers); di-(meth)acrylamide-terminated polydimethylsiloxanes (polysiloxane crosslinkers); bis-3-methacryloxy-2-hydroxypropyloxypropyl polydimethylsiloxane (polysiloxane crosslinker); N,N,N',N'-tetrakis(3-methacryloxy-2-hydroxypropyl)-alpha,omega-bis-3-aminopropyl-polydimethylsiloxane (polysiloxane crosslinkers); polysiloxanylalkyl (meth)acrylic monomers; the reaction products of glycidyl methacrylate with amino-functional polydimethylsiloxanes; hydroxyl-containing polysiloxane vinylic monomers or crosslinkerss; polysiloxane-containing macromer selected from the group consisting of Macromer A, Macromer B, Macromer C, and Macromer D described in US 5,760,100 (herein incorporated by reference in its entirety); the reaction products of glycidyl methacrylate with amino-functional polydimethylsiloxanes; hydroxyl-functionalized siloxane-containing vinylic monomers or macromers; polysiloxane-containing macromers disclosed in U.S. Patent Nos. 4,136,250, 4,153,641, 4,182,822, 4,189,546, 4,343,927, 4,254,248, 4,355,147, 4,276,402, 4,327,203, 4,341,889, 4,486,577, 4,543,398, 4,605,712, 4,661,575, 4,684,538, 4,703,097, 4,833,218, 4,837,289, 4,954,586, 4,954,587, 5,010,141, 5,034,461, 5,070,170, 5,079,319, 5039,761, 5,346,946, 5,358,995, 5,387,632, 5,416,132, 5,451,617, 5,486,579, 5,962,548, 5,981,675, 6,039,913, and 6,762,264 (here incorporated by reference in their entireties); polysiloxane-containing macromers disclosed in U.S. Patent Nos. 4,259,467, 4,260,725, and 4,261,875 (herein incorporated by reference in their entireties). Di and triblock macromers consisting of polydimethylsiloxane and polyalkyleneoxides could also be of utility. For example one might use methacrylate end capped polyethyleneoxide-block-polydimethylsiloxane-block-polyethyleneoxide to enhance oxygen permeability. Suitable monofunctional hydroxyl-functionalized siloxane-containing vinylic monomers/macromers and suitable multifunctional hydroxyl-functionalized siloxane-containing vinylic monomers/macromers are commercially available from Gelest, Inc, Morrisville, PA.

A polysiloxane-containing vinylic macromer can be prepared according to any known procedures, for example, those described in U.S. patent Nos. 4,136,250, 4,486,577, 4,605,712, 5,034,461, 5,416,132, and 5,760,100, herein incorporated by reference in their entireties.

Any suitable silicone-containing actinically-crosslinkable prepolymers can be used in the invention. Examples of preferred silicone-containing actinically-crosslinkable prepolymers include without limitation those described in US Patent Nos. 6,039,913, 7,091,283, 7,268,189 and 7,238,750, and in US patent application Nos. 09/525,158, 11/825,961, 12/001,562, 12/001,521, 12/077,772, 12/077,773, which are incorporated herein by references in their entireties.

Any solvo-surfactants which are an alkyl (propylene glycol)ₙ ether wherein alkyl is a linear alkyl group having 2 to 5 carbon atoms and n is the integer 1, 2 or 3 can be used according to the invention as they can facilitate dissolving or dispersing and maintaining in solution both a siloxane-containing vinylic monomer and a polysiloxane containing vinylic monomer or macromer or crosslinker as used for making silicon hydrogel lenses.

Preferred as solvo-surfactants are alkyl (propylene glycol)ₙ ether wherein alkyl is a linear alkyl group having 3 or 4 carbon atoms and n is the integer 1 or 2.

In particular some Dowanol products are preferred, such as Dowanol PnB, a compound as defined hereinbefore wherein alkyl is n-butyl and n is 1, also named propyleneglycol-n-butylether, or Dowanol PnP, a compound as defined hereinbefore wherein alkyl is n-propyl and n is 1, also named propyleneglycol-n-propylether or Dowanol DPnB, a compound as defined hereinbefore wherein alkyl is n-butyl and n is 2 also named dipropyleneglycol-n-butylether, the latter being most preferred.

The amount of the solvo-surfactant is from about 0.1% to about 10% by weight, preferably from about 0.5% to about 6% by weight and most preferred from about 1% to about 5% by weight. A very preferred amount of solvo-surfactant is from about 2.8% to about 4.5 % by weight. Even more preferred is an amount from about 3% to about 4% by weight of solvo-surfactant. Most preferred is an amount of about 3.1 % by weight of solvo-surfactant, in particular an amount of about 3.1% by weight of Dowanol DPnB.

In accordance with the present invention, a fluid polymerizable composition can comprise various components as known to a person skilled in the art, such as, for example, one or more hydrophilic vinylic monomers, one or more hydrophobic vinylic monomers, a photoinitiator, one or more cross-linking agents, a UV-absorbing agent, a visibility tinting agent (e.g., a dye, a pigment, or a mixture thereof), an antimicrobial agent (e.g., silver nanoparticles), a bioactive agent, a leachable lubricant, and the like, as known to a person skilled in the art. a chain transfer agent,

Any hydrophilic vinylic monomer can be used in the invention. Examples of preferred hydrophilic vinylic monomers are N,N-dimethylacrylamide (DMA), N,N-dimethylmethacrylamide (DMMA), 2-acrylamidoglycolic acid, 3-acryloylamino-1-propanol, N-hydroxyethyl acrylamide, *N*-[tris(hydroxymethyl)methyl]-acrylamide, N-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrolidone, 5-ethyl-3-methylene-2-pyrrolidone, 1-n-propyl-3-methylene-2-pyrrolidone, 1-n-propyl-5-methylene-2-pyrrolidone, 1-isopropyl-3-methylene-2-pyrrolidone, 1-isopropyl-5-methylene-2-pyrrolidone, 1-n-butyl-3-methylene-2-pyrrolidone, 1-tert-butyl-3-methylene-2-pyrrolidone, 2-hydroxyethylmethacrylate (HEMA), 2-hydroxyethyl acrylate (HEA), hydroxypropyl acrylate, hydroxypropyl methacrylate (HPMA), trimethylammonium 2-hydroxy propylmethacrylate hydrochloride, aminopropyl methacrylate hydrochloride, dimethylaminoethyl methacrylate (DMAEMA), glycerol methacrylate (GMA), N-vinyl-2-pyrrolidone (NVP), allyl alcohol, vinylpyridine, a C₁-C₄-alkoxy polyethylene glycol (meth)acrylate having a weight average molecular weight of up to 1500, methacrylic acid, N-vinyl formamide, N-vinyl acetamide, N-vinyl isopropylamide, N-vinyl-N-methyl acetamide, N-vinyl caprolactam, and mixtures thereof.

By incorporating a certain amount of hydrophobic vinylic monomer in a fluid composition, the mechanical properties (e.g., modulus of elasticity) of the resultant polymer may be improved. Nearly any hydrophobic vinylic monomer can be used in the invention. Examples of preferred hydrophobic vinylic monomers include methyl (meth)acrylate, ethyl (meth)acrylate, propyl (meth)acrylate, isopropyl (meth)acrylate, butyl (meth)acrylate, sec-butyl (meth)acrylate, isobutyl (meth)acrylate, t-butyl (meth)acrylate, cyclohexylacrylate, 2-ethylhexylacrylate, vinyl acetate, vinyl propionate, vinyl butyrate, vinyl valerate, styrene, chloroprene, vinyl chloride, vinylidene chloride, acrylonitrile, 1-butene, butadiene, methacrylonitrile, vinyl toluene, vinyl ethyl ether, perfluorohexylethyl-thio-carbonyl-aminoethylmethacrylate, isobornyl methacrylate, trifluoroethyl methacrylate, hexafluoro-isopropyl methacrylate, hexafluorobutyl methacrylate, a siloxane-containing vinylic monomer as described previously, a polysiloxane-containing vinylic monomer (having 3 to 8 silicone atoms), and mixtures thereof. Most preferably, the polymerizable composition comprises a bulky hydrophobic vinylic monomer. Preferred bulky hydrophobic vinylic monomers include without limitation N-[tris(trimethylsiloxy)silylpropyl] (meth)acrylamide; tris(trimethylsilyloxy)-silylpropyl methacrylate (TRIS); (3-methacryloxy-2-hydroxypropyloxy)propyl-bis(trimethyl-siloxy)-methylsilane); (3-methacryloxy-2-hydroxypropyloxy)propyl-tris(trimethylsiloxy) silane; cyclohexylacrylate, isobornyl methacrylate, a polysiloxane-containing vinylic monomer (having 3 to 8 silicone atoms), and combinations thereof.

Preferred polymerizable UV absorbing agents include without limitation 2-(2-hydroxy-5-vinylphenyl)-2H-benzotriazole, 2-(2-hydroxy-5-acrylyloxyphenyl)-2H-benzotriazole, 2-(2-hydroxy-3-methacrylamido methyl-5-tert octylphenyl)benzotriazole, 2-(2'-hydroxy-5'-methacrylamidophenyl)-5-chlorobenzotriazole, 2-(2'-hydroxy-5'-methacrylamido-phenyl)-5-methoxybenzotriazole, 2-(2'-hydroxy-5'-methacryloxypropyl-3'-t-butyl-phenyl)-5-chlorobenzotriazole, 2-(2'-hydroxy-5'-methacryloxyethylphenyl)benzotriazole, 2-(2'-hydroxy-5'-methacryloxypropylphenyl)benzotriazole, 2-hydroxy-4-acryloxy alkoxy benzophenone, 2-hydroxy-4-methacryloxy alkoxy benzophenone, allyl-2-hydroxybenzophenone, 2-hydroxy-4-methacryloxy benzophenone. A polymerizable UV-absorbing agent is generally present in the polymerizable composition for preparing a polysiloxane copolymer which is ethylenically functionalized in turn to obtain a polysiloxane prepolymer of the invention in an amount sufficient to render a contact lens, which is made from a lens forming material including the prepolymer and which absorbs at least about 80 percent of the UV light in the range of from about 280 nm to about 370 nm that impinges on the lens. A person skilled in the art will understand that the specific amount of UV-absorbing agent used in the polymerizable composition will depend on the molecular weight of the UV-absorbing agent and its extinction coefficient in the range from about 280 to about 370 nm. In accordance with the invention, the polymerizable composition comprises about 0.2% to about 5.0%, preferably about 0.3% to about 2.5%, more preferably about 0.5% to about 1.8%, by weight of a UV-absorbing agent.

A photoinitiator can initiate free radical polymerization and/or crosslinking by the use of light. Suitable photoinitiators are benzoin methyl ether, diethoxyacetophenone, a benzoylphosphine oxide, 1-hydroxycyclohexyl phenyl ketone and Darocur and Irgacure types, preferably Darocur 1173®, Irgacure 369®, Irgacure 379®, and Irgacure 2959®. Examples of benzoylphosphine oxide initiators include 2,4,6-trimethylbenzoyldiphenylo-phosphine oxide (TPO); bis-(2,6-dichlorobenzoyl)-4-N-propylphenylphosphine oxide; and bis-(2,6-dichlorobenzoyl)-4-N-butylphenylphosphine oxide. Reactive photoinitiators which can be incorporated, for example, into a macromer or can be used as a special monomer are also suitable. Examples of reactive photoinitiators are those disclosed in EP 632 329, herein incorporated by reference in its entirety. The polymerization can then be triggered off by actinic radiation, for example light, in particular UV light of a suitable wavelength. The spectral requirements can be controlled accordingly, if appropriate, by addition of suitable photosensitizers

Cross-linking agents are compounds having two or more ethylenically unsaturated groups and having a molecular weight of less than 700 Daltons. Crosslinking agents may be used to improve structural integrity and mechanical strength. Examples of cross-linking agents include without limitation tetra(ethyleneglycol) diacrylate, tri(ethyleneglycol) diacrylate, ethyleneglycol diacylate, di(ethyleneglycol) diacrylate, tetraethyleneglycol dimethacrylate, triethyleneglycol dimethacrylate, ethyleneglycol dimethacylate, di(ethyleneglycol) dimethacrylate, trimethylopropane trimethacrylate, pentaerythritol tetramethacrylate, bisphenol A dimethacrylate, vinyl methacrylate, ethylenediamine dimethyacrylamide, glycerol dimethacrylate, triallyl isocyanurate, triallyl cyanurate, allylmethacrylate, and combinations thereof. A preferred cross-linking agent is tetra(ethyleneglycol) diacrylate, tri(ethyleneglycol) diacrylate, ethyleneglycol diacrylate, di(ethyleneglycol) diacrylate, triallyl isocyanurate, or triallyl cyanurate.

The amount of a cross-linking agent used is expressed in the weight content with respect to the total polymer and is preferably in the range from about 0.05% to about 4%, and more preferably in the range from about 0.1% to about 2%.

Examples of preferred pigments include any colorant permitted in medical devices and approved by the FDA, such as D&C Blue No. 6, D&C Green No. 6, D&C Violet No. 2, carbazole violet, certain copper complexes, certain chromium oxides, various iron oxides, phthalocyanine green, phthalocyanine blue, titanium dioxides, etc. See Marmiom DM Handbook of U.S. Colorants for a list of colorants that may be used with the present invention. A more preferred embodiment of a pigment include (C.I. is the color index no.), without limitation, for a blue color, phthalocyanine blue (pigment blue 15:3, C.I. 74160), cobalt blue (pigment blue 36, C.I. 77343), Toner cyan BG (Clariant), Permajet blue B2G (Clariant); for a green color, phthalocyanine green (Pigment green 7, C.I. 74260) and chromium sesquioxide; for yellow, red, brown and black colors, various iron oxides; PR122, PY154, for violet, carbazole violet; for black, Monolith black C-K (CIBA Specialty Chemicals).

The bioactive agent incorporated in the polymeric matrix is any compound that can prevent a malady in the eye or reduce the symptoms of an eye malady. The bioactive agent can be a drug, an amino acid (e.g., taurine, glycine, etc.), a polypeptide, a protein, a nucleic acid, or any combination thereof. Examples of drugs useful herein include, but are not limited to, rebamipide, ketotifen, olaptidine, cromoglycolate, cyclosporine, nedocromil, levocabastine, lodoxamide, ketotifen, or the pharmaceutically acceptable salt or ester thereof. Other examples of bioactive agents include 2-pyrrolidone-5-carboxylic acid (PCA), alpha hydroxyl acids (e.g., glycolic, lactic, malic, tartaric, mandelic and citric acids and salts thereof, etc.), linoleic and gamma linoleic acids, and vitamins (e.g., B5, A, B6, etc.).

Examples of leachable lubricants include without limitation mucin-like materials (e.g., polyglycolic acid), non-crosllinkable hydrophilic polymers (i.e., without ethylenically unsaturated groups), one or more hydrophobic comfort agent, and a mixture thereof.

Any hydrophilic polymers or copolymers without any ethylenically unsaturated groups can be used as leachable lubricants. Preferred examples of non-crosslinkable hydrophilic polymers include, but are not limited to, polyvinyl alcohols (PVAs), polyamides, polyimides, polylactone, a homopolymer of a vinyl lactam, a copolymer of at least one vinyl lactam in the presence or in the absence of one or more hydrophilic vinylic comonomers, a homopolymer of acrylamide or methacrylamide, a copolymer of acrylamide or methacrylamide with one or more hydrophilic vinylic monomers, polyethylene oxide (i.e., polyethylene glycol (PEG)), a polyoxyethylene derivative, poly-N-N-dimethylacrylamide, polyacrylic acid, poly 2 ethyl oxazoline, heparin polysaccharides, polysaccharides, and mixtures thereof.
The weight-average molecular weight M_{w} of the non-crosslinkable hydrophilic polymer is preferably from 5,000 to 1,500,000, more preferably from 50,000 to 1,200,000, even more preferably from 100,000 to 1,000,000, Daltons.

A hydrophobic comfort agent is a compound or a mixture of compounds which can strengthen and/or stabilize the tear film lipid layer. Examples of hydrophobic comfort agents include, without limitation, phospholipids, monoglycerides, diglycerides, triglycerides, glycolipids, glyceroglycolipids, sphingolipids, sphingo-glycolipids, fatty alcohols, hydrocarbons having a C₁₂-C₂₈ chain in length, wax esters, fatty acids, mineral oils, silicone oils, and combinations thereof.

Exemplary phospholipids include, without limitation, lecithin, phosphatidyl ethanolamine, lysolecithin, lysophosphatidylethanolamine, phosphatidylserine, phosphatidyl inositol, sphingomyelin, cephalin, cardiolipin, phosphatidic acid, cerebrosides, dicetyl-phosphate, phosphatidyl-choline and dipalmitoyl-phosphatidylcholine. Preferred phospholipids are phosphatidylcholine, phosphatidylethanolamine, phosphatidylserine, phosphatidylinositol, and sphingomyelin.

Glycolipids are carbohydrate-attached lipids. Exemplary glycolipids include, without limitation, glyceroglycolipids, glycosphingolipids, Gangliosides. Exemplary glyceroglycolipids include, without limitation, Galactolipids, and Sulfolipids. Glycosphingolipids are ceramides with one or more sugar residues joined in a β-glycosidic linkage at the 1-hydroxyl position. Gangliosides have at least three sugars, one of which must be sialic acid.

Exemplary sphingolipids include, without limitation, sphingomyelins. Sphingomyelins have a phosphorylcholine or phosphoroethanolamine molecule esterified to the 1-hydroxy group of a ceramide.

Exemplary fatty alcohols include, without limitation, capryl alcohol (1-octanol), 2-ethyl hexanol, pelargonic alcohol (1-nonanol), capric alcohol (1-decanol, decyl alcohol), 1-dodecanol (lauryl alcohol), myristyl alcohol (1-tetradecanol), cetyl alcohol (1-hexadecanol), palmitoleyl alcohol (cis-9-hexadecen-1-ol), stearyl alcohol (1-octadecanol), isostearyl alcohol (16-methylheptadecan-1-ol), elaidyl alcohol (9E-octadecen-1-ol), oleyl alcohol (cis-9-octadecen-1-ol), linoleyl alcohol (9Z, 12Z-octadecadien-1-ol), elaidolinoleyl alcohol (9E, 12E-octadecadien-1-ol), linolenyl alcohol (9Z, 12Z, 15Z-octadecatrien-1-ol), elaidolinolenyl alcohol (9E, 12E, 15-E-octadecatrien-1-ol), ricinoleyl alcohol (12-hydroxy-9-octadecen-1-ol), arachidyl alcohol (1-eicosanol), behenyl alcohol (1-docosanol), erucyl alcohol (cis-13-docosen-1-ol), lignoceryl alcohol (1-tetracosanol), ceryl alcohol (1-hexacosanol), montanyl alcohol, cluytyl alcohol (1-octacosanol), myricyl alcohol, melissyl alcohol (1-triacontanol), geddyl alcohol (1-tetratriacontanol), and Cetearyl alcohol

Fatty acids can be medium chain fatty acids with alphatic tails of 8 to 14 carbons or long chain fatty acids with alphatic tails of at least 16 carbons). The preferred fatty acids are long chain fatty acids. Exemplary fatty acids include, without limitation, oleic acid, stearic acid, palmytic acid myristic acid, linoleic acid, linolenic acid, arachidic acid, aracha-donic acid, myristoleic acid; palmitoleic acid; oleic acid; α-linolenic acid; eicosapentaenoic acid; erucic acid; docosahexaenoic acid.

A monoglyceride is a glyceride consisting of one fatty acid chain covalently bonded to a glycerol molecule through an ester linkage, and can be broadly divided into two groups; 1-monoacylglycerols and 2-monoacylglycerols, depending on the position of the ester bond on the glycerol moiety. A diglyceride is a glyceride consisting of two fatty acid chains covalently bonded to a glycerol molecule through ester linkages. A triglyceride is glyceride in which the glycerol is esterified with three fatty acids.

In accordance with the invention, a fluid composition can be a solution or a melt at a temperature from about 20°C to about 85°C. Preferably, a fluid composition is a solution of all desirable components in water, or an organic solvent, a mixture of water and one or more organic solvents, or a mixture of two or more organic solvents.

A fluid composition of the invention can be prepared by dissolving all of the desirable components in any suitable solvent known to a person skilled in the art. Example of suitable solvents includes without limitation, water, tetrahydrofuran, tripropylene glycol methyl ether, dipropylene glycol methyl ether, ethylene glycol n-butyl ether, ketones (e.g., acetone, methyl ethyl ketone, etc.), diethylene glycol n-butyl ether, diethylene glycol methyl ether, ethylene glycol phenyl ether, propylene glycol methyl ether, propylene glycol methyl ether acetate, dipropylene glycol methyl ether acetate, propylene glycol n-propyl ether, dipropylene glycol n-propyl ether, tripropylene glycol n-butyl ether, propylene glycol n-butyl ether, dipropylene glycol n-butyl ether, tripropylene glycol n-butyl ether, propylene glycol phenyl ether dipropylene glycol dimetyl ether, polyethylene glycols, polypropylene glycols, ethyl acetate, butyl acetate, amyl acetate, methyl lactate, ethyl lactate, i-propyl lactate, methylene chloride, 2-butanol, 1-propanol, 2-propanol, menthol, cyclohexanol, cyclopentanol and exonorborneol, 2-pentanol, 3-pentanol, 2-hexanol, 3-hexanol, 3-methyl-2-butanol, 2-heptanol, 2-octanol, 2-nonanol, 2-decanol, 3-octanol, norborneol, tert-butanol, tert-amyl, alcohol, 2-methyl-2-pentanol, 2,3-dimethyl-2-butanol, 3-methyl-3-pentanol, 1-methylcyclohexanol, 2-methyl-2-hexanol, 3,7-dimethyl-3-octanol, 1-chloro-2-methyl-2-propanol, 2-methyl-2-heptanol, 2-methyl-2-octanol, 2-2-methyl-2-nonanol, 2-methyl-2-decanol, 3-methyl-3-hexanol, 3-methyl-3-heptanol, 4-methyl-4-heptanol, 3-methyl-3-octanol, 4-methyl-4-octanol, 3-methyl-3-nonanol, 4-methyl-4-nonanol, 3-methyl-3-octanol, 3-ethyl-3-hexanol, 3-methyl-3-heptanol, 4-ethyl-4-heptanol, 4-propyl-4-heptanol, 4-isopropyl-4-heptanol, 2,4-dimethyl-2-pentanol, 1-methylcyclopentanol, 1-ethylcyclopentanol, 1-ethylcyclopentanol, 3-hydroxy-3-methyl-1-butene, 4-hydroxy-4-methyl-1-cyclopentanol, 2-phenyl-2-propanol, 2-methoxy-2-methyl-2-propanol 2,3,4-trimethyl-3-pentanol, 3,7-dimethyl-3-octanol, 2-phenyl-2-butanol, 2-methyl-1-phenyl-2-propanol and 3-ethyl-3-pentanol, 1-ethoxy-2-propanol, 1-methyl-2-propanol, t-amyl alcohol, isopropanol, 1-methyl-2-pyrrolidone, N,N-dimethylpropionamide, dimethyl formamide, dimethyl acetamide, dimethyl propionamide, N-methyl pyrrolidinone, and mixtures thereof.

In accordance with the invention, the monomer mixture can be introduced (dispensed) into a cavity formed by a mold according to any known methods.

After the monomer mixture is dispensed into the mold, it is polymerized to produce a contact lens. Crosslinking may be initiated by exposing the monomer mixture in the mold to a spatial limitation of actinic radiation to crosslink the polymerizable components in the monomer mixture. The crosslinking according to the invention may be effected in a very short time, e.g. in ≤ about 200 seconds, preferably in ≤ about 150 seconds, more preferably in ≤ 100 about seconds, even more preferably in ≤ about 50 seconds, and most preferably in 5 to 30 seconds.

Opening of the mold so that the molded lens can be removed from the mold may take place in a manner known *per se.*

The molded contact lens can be subject to lens extraction to remove unpolymerized polymerizable components, such as, for example, vinylic monomers and/or macromers, crosslinkers, crosslinking agents. The extraction solvent can be any solvent known to a person skilled in the art. Examples of suitable extraction solvent are those described above for preparing monomer mixtures. After extraction, lenses can be hydrated in water or an aqueous solution of a wetting agent (e.g., a hydrophilic polymer).

The molded contact lenses can further subject to further processes, such as, for example, surface treatment (for example, such as, plasma treatment, chemical treatments, the grafting of hydrophilic monomers or macromers onto the surface of a lens, Layer-by-layer coating, etc.); packaging in lens packages with a packaging solution which can contain about 0.005% to about 5% by weight of a wetting agent (e.g., a hydrophilic polymer described above) and/or a viscosity-enhancing agent (e.g., methyl cellulose (MC), ethyl cellulose, hydroxymethylcellulose, hydroxyethyl cellulose (HEC), hydroxypropylcellulose (HPC), hydroxypropylmethyl cellulose (HPMC), or a mixture thereof); sterilization; and the like.

The molded contact lenses preferably have at one property selected from the group consisting of: an oxygen transmissibility (Dk/t) of preferably at least about 50 barrers/mm, more preferably at least about 60 barrers/mm, even more preferably at least about 80 barrers/mm; a lens center thickness of preferably from about 40 microns to 160 microns, more preferably from about 50 microns to 140 microns, even more preferably from about 60 microns to 120 microns; an elastic modulus of from about 0.1 MPa to about 2.0 MPa, preferably from about 0.2 MPa to about 1.5 MPa, more preferably from about 0.3 MPa to about 1.2, even more preferably from about 0.4 MPa to about 1.0 MPa; an lonoflux Diffusion Coefficient, D, of, preferably at least about 1.0 x 10⁻⁵ mm²/min, more preferably at least about 2.0 x 10⁻⁵ mm²/min, even more preferably at least about 6.0 x 10⁻⁵ mm²/min; a water content of preferably from about 15% to about 65%, more preferably from about 20% to about 55% by weight when fully hydrated; and combinations thereof.

Although various embodiments of the invention have been described using specific terms, devices, and methods, such description is for illustrative purposes only. The words used are words of description rather than of limitation. It is to be understood that changes and variations may be made by those skilled in the art without departing from the scope of the present invention, which is set forth in the following claims.

The previous disclosure will enable one having ordinary skill in the art to practice the invention. In order to better enable the reader to understand specific embodiments and the advantages thereof, reference to the following non-limiting examples is suggested. However, the following examples should not be read to limit the scope of the invention.

### Example A

### Preparation of Chain-Extended Polydimethylsiloxane Vinylic Macromer with Terminal Methacrylate Groups (CE-PDMS Macromer)

In the first step, α,ω-bis(2-hydroxyethoxypropyl)-polydimethylsiloxane (Mn = 2000, Shin-Etsu, KF-6001a) is capped with isophorone diisocyanate by reacting 49.85 g of α,ω-bis(2-hydroxyethoxypropyl)-polydimethylsiloxane with 11.1 g isophorone diisocyanate (IPDI) in 150 g of dry methyl ethyl ketone (MEK) in the presence of 0.063g of dibutyl-tindilaurate (DBTDL). The reaction is kept for 4.5 h at 40° C, forming IPDI-PDMS-IPDI. In the second step, a mixture of 164.8 g of α,ω-bis(2-hydroxyethoxypropyl)-polydimethylsiloxane (Mn = 3000, Shin-Etsu, KF-6002) and 50 g of dry MEK are added dropwise to the IPDI-PDMS-IPDI solution to which has been added an additional 0.063 g of DBTDL. The reactor is held for 4.5 h at 40° C, forming HO-PDMS-IPDI-PDMS-IPDI-PDMS-OH. MEK is then removed under reduced pressure. In the third step, the terminal hydroxyl-groups are capped with methacryloyloxyethyl groups in a third step by addition of 7.77 g of isocyanatoethylmethacrylate (IEM) and an additional 0.063 g of DBTDL, forming IEM-PDMS-IPDI-PDMS-IPDI-PDMS-IEM.

### Alternate Preparation of CE-PDMS Macromer with Terminal Methacrylate Groups

240.43 g of KF-6001 is added into a 1-L reactor equipped with stirring, thermometer, cryostat, dropping funnel, and nitrogen/vacuum inlet adapter, and then dried by application of high vacuum (2×10⁻² mBar). Then, under an atmosphere of dry nitrogen, 320 g of distilled MEK is then added into the reactor and the mixture is stirred thoroughly. 0.235 g of DBTDL are added to the reactor. After the reactor is warmed to 45°C, 45.86 g of IPDI are added through an addition funnel over 10 minutes to the reactor under moderate stirring. The reaction is kept for 2 hours at 60°C. 630 g of KF-6002 dissolved in 452 g of distilled MEK are then added and stirred until a homogeneous solution is formed. 0.235 g of DBTDL are added, and the reactor is held at 55°C overnight under a blanket of dry nitrogen. The next day, MEK is removed by flash distillation. The reactor is cooled and 22.7 g of IEM are then charged to the reactor followed by 0.235 g of DBTDL. After 3 hours, an additional 3.3 g of IEM are added and the reaction is allowed to proceed overnight. The following day, the reaction mixture is cooled to 18°C to obtain CE-PDMS macromer.

### Lens Formulation

A lens formulation for cast-molding of silicone hydrogel contact lenses is prepared to have the following composition: 31.2% by weight of CE-PDMS prepared above; 20.3% by weight of N-[tris(trimethylsiloxy)-silylpropyl]acrylamide (TRIS-acrylamide); 22.8% by weight of N,N-dimethylacrylamide (DMA); 0.6% by weight of N-(carbonyl-methoxypoly-ethylene glycol-2000)-1,2-distearoyl-sn-glycero-3-phosphoethanolamin, sodium salt) (L-PEG 2000); 0.7% 1,2-dimyristoyl-sn-glycero-3-phosphocholine (DMPC), 1.0% by weight of Darocur 1173; 23.4% by weight of 1-Propanol. This formulation is called DT1 hereinafter.

### Example B

### Cast Molding of Silicone Hydrogel lenses under a spatial limitation of actinic radiation

Lenses are prepared by cast-molding of a lens formulation prepared in Example A in a reusable mold, similar to the mold shown in Figs. 1-6 in U.S. patent Nos.7,384,590 and 7,387,759 (Figs. 1-6). The mold comprises a female (front curve) mold half made of glass and a male (base curve) mold half made of quartz. The UV irradiation source is a Hama-matsu lamp with the WG335 +TM297 cut off filter at an intensity of about 164 mW /cm². The lens formulation in the mold is irradiated with UV irradition for about 27 seconds. After opening the mold and removing the molded lens from the mold, the molding surfaces of the male (base curve) and female (front curve) mold halves are washed as described below.

### Example C

### Soil residues on molds and model soil

The soil residues produced during the silicon hydrogel production with the LS technology on molds, in the cleaning chamber, in pipes etc consist mainly of excess, uncured formulation for the production of silicon hydrogel devices. A minor part of the soil consists of product converted during the UV reaction. Most critical for the cleaning of the molds and other soiled equipment parts are the silicon containing compounds in the formulation, i.e. a reactive polymeric silicon compound (CE-PDMS) and TRIS-acrylamide (TRIS-AAm). The other compounds are water soluble and could be washed off easily. The silicon compounds are not or almost not water soluble, CE-PDMS is at ambient temperature a high-viscous oil, TRIS-AAm a solid (mp: 50°C). Based on these observations a model soil consisting of a mixture of CE-PDMS and TRIS-AAm (ratio 3:2 by weight) is mixed and utilized for studies regarding soil solubility and/or mold cleaning.

### Dissolving Power

An important criterion for a cleaning solution is its capability to remove a soil from a substrate and to keep it in liquid state, i.e. to dissolve or emulgate it, respectively, from where it can be easily separated from the device to be cleaned. As a criterion for the evaluation of different potential cleaning additives the dissolving power (% weight loss / minute) of the model soil (CE-PDMS/TRIS-AAm 3:2) coated on a glass slide in the appropriate aqueous solutions was determined. A substantial number of additives as aqueous solutions were tested as cleaning solutions with different concentrations at 35°C from the classes of anionic surfactants, silicone containing surfactants, non-ionic surfactants and mixtures thereof as as well as solvents and solvo-surfactants, see the following table A.

**Table A:**

| **Ex-amp le** | **Additive and Supplier** | **Con cen trat ion (%)** | **Dissolution Rate at 35°C (% mass loss / min)** | **Solution forms a stable foam (Yes/No)** | | |
|---|---|---|---|---|---|---|
| | | | | **Tested concentration** | **22°C** | **35°C** |
| 1 | None (Water) | | 0 | | | |

| | **Anionic Surfactants** | | | | | |
|---|---|---|---|---|---|---|
| 2 | Sodium dodecyl sulfate, Sigma Aldrich | 1 | 0 | 1 % | Y | Y |
| 3 | Dioctylsulfosuccinate sodium salt, Sigma Aldrich | 1 | 2 | - | - | - |

| | **Silicone surfactants** | | | | | |
|---|---|---|---|---|---|---|
| 4a | Sylgard 309, Dow Corning | 0.5 | 6 | - | - | - |
| 4b | Sylgard 309, Dow Corning | 3 | 1 | 3 % | Y | Y |
| 5 | DBE 712, ABCR | ? | 13 | | | |
| 6 | DBE 821, ABCR | ? | 11 | | | |
| 7a | Shin Etsu F-518 | 0.5 | 2 | - | - | - |
| 7b | Shin Etsu F-518 | 3 | 3 | 3 % | Y | Y |
| 8a | Shin Etsu KF-643 | 0.1 | | 0.1 % | Y | - |
| 8b | Shin Etsu KF-643 | 3 | 5 | 3 % | Y | Y |
| 9 | Shin Etsu KM 7750B | 3 | -4 | 3 % | N | N |
| 10 | Silsuf B208, Siltech LLC | 3 | 3 | 3 % | Y | Y |
| | **Non-ionic surfactants** | | | | | |
| 11a | PEG-12 dimethicone, Claero | 1 | 5 | 0.2 % | Y | - |
| 11b | PEG-12 dimethicone, Claero | 3 | 2 | 3 % | Y | Y |
| 12 | Pluronic PE 6400, BASF | 1 | 5 | 0.2 % | Y | - |
| 13 | Pluronic PE 6400, BASF | 3 | 1 | | - | - |
| 14 | Pluronic 31R1, BASF | 0.5 | 7 | 0.2 % | N | |
| 15 | Tween 20, Sigma Aldrich | 1 | 0 | | - | - |
| 16 | Tomadol 1-9, Air Products | 3 | 2 | 3 % | Y | Y |
| 17a | Envirogem 360, Air Products | 0.5 | 0 | 0.1 % | N | N |
| 17b | Envirogem 360, Air Products | 1 | -9 | 1 % | N | N |
| 17c | Envirogem 360, Air Products | 3 | -10 | 3 % | N | N |

| | **Surfactant Mixtures** | | | | | |
|---|---|---|---|---|---|---|
| 18 | PreciClean P39, Amsonic AG | 1 | -1 | | | |
| 19 | PreciClean P55, Amsonic AG | 1 | 3 | | | |
| 20 | Deconex 64 Neutradry, Borer | 1 | 5 | | | |
| 21 | SurTec 084, SurTec | 3 | 1 | 0.3 % | Y | N |

| | **Solvents** | | | | | |
|---|---|---|---|---|---|---|
| 22a | 1-Propanol, Sigma Aldrich ("SiA" hereinafter) | 1 | 1 | - | - | - |
| 22b | 1-Propanol, SiA | 3 | 3 | - | - | - |
| 22c | 1-Propanol, SiA | 10 | 46 | - | - | - |
| 23a | Methylethylketone, SiA | 1 | 4 | - | - | - |
| 23b | Methylethylketone, SiA | 5 | 86 | - | - | - |
| 23c | Methylethylketone, SiA | 10 | 94 | - | - | - |
| 24 | Butanol, SiA | 1 | 1 | - | - | - |
| 25 | 1-Pentanol, SiA | 1 | 1 | - | - | - |
| 26 | 1-Hexanol, SiA | 0.3 | 49 | - | - | - |
| 27 | 2-Hexanol, SiA | 1.1 | 38 | - | - | - |
| 28 | Hexane Acid, SiA | 0.5 | 71 | - | - | - |
| 29 | 1,2-Octanediol, SiA | 0.5 | 19 | - | - | - |
| 30a | Ethylene glycol hexylether, SiA | 0.5 | 43 | | | |
| 30b | Ethylene glycol hexylether, SiA | 1 | 14 | | | |
| 31 | Diethylene glycol butylether, SiA | 4 | 2 | 1 % | N | N |
| 32 | 2-Butoxyethyl acetate, SiA | 1 | 30 | 1 % | N | N |

| | **Solvo-surfactants** | | | | | |
|---|---|---|---|---|---|---|
| 33 | Dowanol PM, SiA | 4 | 1 | | | N |
| 34 | Dowanol DPM, SiA | 4 | 0 | 1 % | N | N |
| 35 | Dowanol PnB, SiA | 4 | 93 | 1 % | N | N |
| 36 | Dowanol PnP, SiA | 4 | 91 | 1 % | N | N |
| 37 | Dowanol PMA, SiA | 4 | 88 | 1 % | N | N |
| 38 | Proglyde DMM, SiA | 4 | 83 | 1 % | N | N |
| 39a | Dowanol DPnB, SiA | 1 | 3 | 1 % | N | N |
| 39b | Dowanol DPnB, SiA | 3.1 | 61 | | N | N |
| 39c | Dowanol DPnB, SiA | 4 | 69 | (Emulsion) | | |

Surprisingly it was found that the dissolution power of the model soil in aqueous solutions of the various tested additive solutions were low, i.e. the soil was not or almost not soluble in most of the corresponding solutions.

The highest dissolution rate in this class was observed with the silicone surfactant DBE 712, namely 13 % mass loss per minute. However, due to the usual low dissolution rate coupled with a tendency of the solutions to foam at 35°C during their application in the preferred spray cleaning process use of such additives is neither promising nor reasonable.

Aqueous solution of organic solvents showed at higher concentrations (e.g. 5 % for MEK) very high dissolution rates (5% MEK: 86% mass loss per minute). Unfortunately aqueous solutions at these concentrations are potentially explosive. For an application of MEK the cleaning equipment will have to be built explosion-proof, and is therefore very complex and not useable for most applications.

Best results were achieved with solvo-surfactants and from this class the best candidates are those with higher flashpoint, e.g. the n-alkyl polypropylene glycol ethers Dowanol PnB, Dowanol PnP, and Dowanol DPnB. At concentrations where these compounds form a homogeneous mixture with water they have dissolution rates for the model soil higher than 60% mass loss/minute with homogeneous aqueous solutions, whereas this rate increases in the two-phase region, i.e. when the additive forms an emulsion with water.

### Example D Lens production and general cleaning procedure

The cleaning performance of several cleaning solutions was investigated with Lightstream molds soiled by the production of uncoated DT1 lenses. For specifics of said formulation and lens production see examples A and B hereinbefore. The molds soiled by the lens production were placed in a laboratory mold cleaning unit and fixed. Then the molds were treated by a warm (32 to 35°C) high pressure (7 bar) jet of the corresponding cleaning solution. The cleaning jet was produced by spraying the cleaning solution through flat fan nozzles (Lechler, Germany # 632.306; 90° spraying angle; distance nozzle orifices/mold surface: 25 mm). During the cleaning process the nozzles move 35 cycles back and forth over the molds. This treatment corresponds with an effective cleaning time of 8 seconds with the corresponding solution. After cleaning the three-way valve of the cleaning unit was opened for mold rinsing with pure water of ambient temperature. The rinsing was performed also in 35 cycles back and forth with a water jet of 4 bar pressure. After rinsing the molds were treated by hand with a pressurized air through an air gun (3 bar) as long (approximately 10 seconds) until they look dry visually. After the cleaning / rinsing and drying process the remaining soil on the molds was rinsed-off with 2-propanol and quantitatively determined by ATR-FTIR spectroscopy.

**Example 41** (Performance of a "unused" cleaning solution): The cleaning performance of an aqueous Dowanol DPnB solution (3.1 %) was investigated according to the above described procedure. After the cleaning procedure only traces of the soil residues were detectable.

**Example 42** (Performance of a "soiled" cleaning solution): In order to determine the cleaning performance of a used, i.e. a "soiled" cleaning solution the cleaning test of example 41 is repeated, but the Dowanol DPnB cleaning solution was "soiled" by addition of a DT1 lens formulation (0.02 %). The results of this test show that the molds were cleaned even in the presence of the formulation as soiling.

**Example 43** (Control experiment): The control experiments of the cleaning tests were performed with pure water as cleaning solution. The result indicated that with warm water the cleaning was insufficient and after cleaning a lot of soil residues remained on the molds.

**Example 44** (Resoiling of "clean" molds - cleaning with soiled water): In order to demonstrate the re-soiling effect to water as cleaning solution was added 0.17 % of an solution of the model soil (50 % CE-PDMS / Tris-AAm 3:2) dissolved in 1-propanol). With this solution cleaning was performed according to the general procedure. The soil residue analysis indicates that molds which were clean before the treatment became soiled by usage of water as cleaning solution.

**Example 45** (Re-soiling of "clean" molds - cleaning with a Dowanol containing cleaning solution): To the soiled cleaning solution of example 44 was added 3.1 % Dowanol DPnB and the cleaning procedure with "clean" mold pairs was repeated. The results of these experiments clearly indicate that in the presence of Dowanol DPnB as cleaning additive the molds remained clean, i.e. this additive effectively prevents a re-soiling.

The results of examples 41 to 45 are summarized and completed in the following table B.

**Table B Soil residues after mold cleaning**

| **Example** | **Molds** | **Cleaning Solution** | **Soil Residues / Mold Pair (in microgram)** |
|---|---|---|---|
| 41 | Soiled by lens production | 3.1 % Dowanol DPnB | DL 1) |
| 42 | Soiled by lens production | 3.1 % Dowanol DPnB soiled with 0.02 % of DT1 formulation | DL 1) |
| 43 (control) | Soiled by lens production | Water | 251 |
| 44 | Clean molds | Water with 0.17 % of a propanolic model soil solution | 352 |
| 45 | Clean molds | Water with 0.17 % of a propanolic model soil solution and 3.1 % Dowanol DPnB | DL 1) |

| | | | |
|---|---|---|---|
| 1) DL denotes "below determination limit, close to detection limit (1 microgram/mold < soil residues < 10 microgram/mold) | | | |

## Claims

1. A method for producing silicone hydrogel contact lenses, comprising the steps of:
(1) providing a reusable mold for making soft contact lenses, wherein the mold has a first mold half with a first molding surface defining the anterior surface of a contact lens and a second mold half with a second molding surface defining the posterior surface of the contact lens, wherein said first and second mold halves are configured to receive each other such that a cavity is formed between said first and second molding surfaces;
(2) introduce a fluid polymerizable composition into the cavity, wherein the fluid polymerizable composition comprises at least one silicone-containing lens-forming material selected from the group consisting of a siloxane-containing vinylic monomer, a polysiloxane-containing vinylic monomer, a polysiloxane-containing macromer, a polysiloxane-containing crosslinker, an actinically-crosslinkable silicone-containing prepolymer, and a mixture thereof;
(3) irradiating, under a spatial limitation of actinic radiation, the fluid composition in the mold for a time period of 200 seconds or less, so as to form a silicone hydrogel contact lens, wherein the formed silicone hydrogel contact lens comprises an anterior surface defined by the first molding surface, an opposite posterior surface defined by the second molding surface, and a lens edge defined by the spatial limitation of actinic radiation;
(4) opening the mold and removing the formed silicone hydrogel contact lens from the mold;
(5) removing the silicone-containing lens forming material and other components of the fluid composition left behind on the first and second molding surfaces of the mold by washing the first and second molding surfaces of the reusable mold with a water-based solution containing from 0.01% to 10% by weight of a solvo-surfactant, wherein the solvo-surfactant is an alkyl (propylene glycol)ₙ ether wherein alkyl is a linear alkyl group having 2 to 5 carbon atoms and n is the integer 1, 2 or 3; and
(6) repeating the steps (2) to (5).

2. The method of claim 1, wherein the solvo-surfactant is an alkyl (propylene glycol)ₙ ether wherein alkyl is a linear alkyl group having 3 or 4 carbon atoms and n is the integer 1 or 2.

3. The method of claim 1 or 2, wherein the solvo-surfactant is an alkyl (propylene glycol)ₙ ether wherein alkyl is linear butyl and n is the integer 1 having the chemical name propyleneglycol-n-butylether.

4. The method of claim 1 or 2, wherein the solvo-surfactant is an alkyl (propylene glycol)ₙ ether wherein alkyl is linear propyl and n is the integer 1 having the chemical name propyleneglycol-n-propylether.

5. The method of claim 1 or 2, wherein the solvo-surfactant is an alkyl (propylene glycol)ₙ ether wherein alkyl is linear butyl and n is the integer 2 having the chemical name di-propyleneglycol-n-butylether.

6. The method of any one of claims 1 to 5, wherein the fluid polymerizable composition comprises a siloxane-containing vinylic monomer and a polysiloxane-containing vinylic monomer or macromer or crosslinker.

7. The method of any one of claims 1 to 6, wherein the siloxane-containing vinylic monomer is N-[tris(trimethylsiloxy)silylpropyl] (meth)acrylamide, N-[tris(dimethyl-propylsiloxy)silylpropyl] (meth)acrylamide, N-[tris(dimethylphenylsiloxy)silylpropyl] acrylamide, N-[tris(dimethylphenylsiloxy)silylpropyl] (meth)acrylamide, N-[tris-(dimethylethylsiloxy)silylpropyl] (meth)acrylamide, N-(2-hydroxy-3-(3-(bis(trimethyl-silyloxy)methylsilyl)propyloxy)propyl)-2- methyl acrylamide; N-(2-hydroxy-3-(3-(bis(trimethylsilyloxy)methylsilyl)propyloxy)propyl) acrylamide; N,N-bis[2-hydroxy-3-(3-(bis(trimethylsilyloxy)methylsilyl)propyloxy)propyl]-2-methyl acrylamide; N,N-bis[2-hydroxy-3-(3-(bis(trimethylsilyloxy)methylsilyl)propyloxy)propyl] acrylamide; N-(2-hydroxy-3-(3-(tris(trimethylsilyloxy)silyl)propyloxy)propyl)-2-methyl acrylamide; N-(2-hydroxy-3-(3-(tris(trimethylsilyloxy)silyl)propyloxy)propyl)acrylamide; N,N-bis[2-hydroxy-3-(3-(tris(trimethylsilyloxy)silyl)propyloxy)propyl]-2-methyl acrylamide; N,N-bis[2-hydroxy-3-(3-(tris(trimethylsilyloxy)silyl)propyloxy)propyl]acrylamide; N-[2-hydroxy-3-(3-(t-butyldimethylsilyl)propyloxy)propyl]-2-methyl acrylamide; N-[2-hydroxy-3-(3-(t-butyldimethylsilyl)propyloxy)propyl]acrylamide; N,N-bis[2-hydroxy-3-(3-(t-butyldimethylsilyl)propyloxy)propyl]-2-methyl acrylamide; N,N-bis[2-hydroxy-3-(3-(t-butyldimethylsilyl)propyloxy)propyl]acrylamide; 3-methacryloxy propylpentamethyldisiloxane, tris(trimethylsilyloxy)silylpropyl methacrylate (TRIS), (3-methacryloxy-2-hydroxypropyloxy)propylbis(trimethylsiloxy)methylsilane), (3-methacryloxy-2-hydroxypropyloxy)propyltris(trimethylsiloxy)silane, 3-methacryloxy-2-(2-hydroxyethoxy)-propyloxy)propylbis(trimethylsiloxy)methylsilane, N-2-methacryloxyethyl-O-(methyl-bis-trimethylsiloxy-3-propyl)silyl carbamate, 3-(trimethylsilyl)-propylvinyl carbonate, 3-(vinyloxycarbonylthio)propyl-tris(trimethyl-siloxy)silane, 3-[tris(trimethylsiloxy)silyl]propylvinyl carbamate, 3-[tris(trimethyl-siloxy)silyl] propyl allyl carbamate, 3-[tris(trimethylsiloxy)silyl]propyl vinyl carbonate, t-butyldimethyl-siloxyethyl vinyl carbonate; trimethylsilylethyl vinyl carbonate, trimethylsilylmethyl vinyl carbonate), or combinations thereof.

8. The method of any one of claims 1 to 7, wherein the siloxane-containing vinylic monomer is N-[tris(trimethylsiloxy)silylpropyl] (meth)acrylamide, tris(trimethyl-silyloxy)silylpropyl methacrylate, 3-methacryloxy-2-hydroxypropyloxy)propyl-bis(trimethylsiloxy)methylsilane, or combinations thereof.

9. The method of any one of claims 1 to 8, wherein the fluid polymerizable composition comprises an actinically-crosslinkable silicone-containing prepolymer..

10. The method of any one of claims 1 to 9, wherein at least one of the first and second molding surfaces is permeable to a crosslinking radiation.

11. The method of claim 10, wherein the reusable mold comprises a mask which is fixed, constructed or arranged in, at or on the mold half having the radiation-permeable molding surface.

12. The method of any one of claims 1 to 11, wherein the fluid polymerizable composition comprises a hydrophilic vinylic monomer selected from the group consisting of N,N-dimethylacrylamide (DMA), N,N-dimethylmethacrylamide (DMMA), 2-acrylamidoglycolic acid, 3-acryloylamino-1-propanol, N-hydroxyethyl acrylamide, *N*-[tris(hydroxymethyl)methyl]-acrylamide, N-methyl-3-methylene-2-pyrrolidone, 1-ethyl-3-methylene-2-pyrrolidone, 1-methyl-5-methylene-2-pyrrolidone, 1-ethyl-5-methylene-2-pyrrolidone, 5-methyl-3-methylene-2-pyrrolidone, 5-ethyl-3-methylene-2-pyrrolidone, 1-n-propyl-3-methylene-2-pyrrolidone, 1-n-propyl-5-methylene-2-pyrrolidone, 1-isopropyl-3-methylene-2-pyrrolidone, 1-isopropyl-5-methylene-2-pyrrolidone, 1-n-butyl-3-methylene-2-pyrrolidone, 1-tert-butyl-3-methylene-2-pyrrolidone, 2-hydroxyethylmethacrylate (HEMA), 2-hydroxyethyl acrylate (HEA), hydroxypropyl acrylate, hydroxypropyl methacrylate (HPMA), trimethylammonium 2-hydroxy propylmethacrylate hydrochloride, aminopropyl methacrylate hydrochloride, dimethylaminoethyl methacrylate (DMAEMA), glycerol methacrylate (GMA), N-vinyl-2-pyrrolidone (NVP), allyl alcohol, vinylpyridine, a C₁-C₄-alkoxy polyethylene glycol (meth)acrylate having a weight average molecular weight of up to 1500, methacrylic acid, N-vinyl formamide, N-vinyl acetamide, N-vinyl isopropylamide, N-vinyl-N-methyl acetamide, N-vinyl caprolactam, and mixtures thereof.

13. The method of any one of claims 1 to 12, wherein the fluid polymerizable composition comprises one or more hydrophobic comfort agents selected from the group consisting of phospholipid, monoglyceride, diglyceride, triglyceride, glycolipid, glyceroglycolipid, sphingolipid, sphingo-glycolipid, fatty alcohol, hydrocarbon having a C₁₂-C₂₈ chain in length, wax ester, fatty acid, mineral oil, silicone oil, and combinations thereof.

14. The method of any one of claims 1 to 13, wherein the fluid polymerizable composition comprises polyglycolic acid and/or a non-crosllinkable hydrophilic polymer having a weight-average molecular weight M_{w} of from 5,000 to 1,500,000, more preferably from 50,000 to 1,200,000, even more preferably from 100,000 to 1,000,000, Daltons.

15. The method of any one of claims 1 to 14, wherein the fluid polymerizable composition comprises a bioactive agent selected from the group consisting of rebamipide, ketotifen, olaptidine, cromoglycolate, cyclosporine, nedocromil, levocabastine, lodoxamide, ketotifen, 2-pyrrolidone-5-carboxylic acid glycolic acid, lactic acid, malic acid, tartaric acid, mandelic acid, citric acids, linoleic acid, gamma linoleic acid, vitamins and the pharmaceutically acceptable salt thereof and combinations thereof.

## Patentansprüche

1. Verfahren zur Herstellung von Silicon-Hydrogel-Kontaktlinsen, umfassend die Schritte:
(1) Bereitstellen eines wiederverwendbaren Formwerkzeugs zur Herstellung weicher Kontaktlinsen, wobei das Formwerkzeug eine erste Formhälfte mit einer ersten Formgebungsfläche, die die anteriore Oberfläche einer Kontaktlinse definiert, und eine zweite Formhälfte mit einer zweiten Formgebungsfläche, die die posteriore Oberfläche einer Kontaktlinse definiert, aufweist, wobei die erste und die zweite Formhälfte derart ausgestaltet sind, einander aufzunehmen, so dass ein Hohlraum zwischen der ersten und der zweiten Formgebungsfläche gebildet wird;
(2) Einführen einer fluiden polymerisierbaren Zusammensetzung in den Hohlraum, wobei die fluide polymerisierbare Zusammensetzung wenigstens ein siliconhaltiges linsenbildendes Material ausgewählt aus der Gruppe bestehend aus einem siloxanhaltigen Vinylmonomer, einem polysiloxanhaltigen Vinylmonomer, einem polysiloxanhaltigen Makromer, einem polysiloxanhaltigen Vernetzer, einem aktinisch vernetzbaren siliconhaltigen Prepolymer und einem Gemisch davon umfasst;
(3) Bestrahlen der fluiden Zusammensetzung in dem Formwerkzeug unter einer räumlichen Begrenzung der aktinischen Strahlung für eine Zeitdauer von 200 Sekunden oder weniger, um eine Silicon-Hydrogel-Kontaktlinse zu bilden, wobei die gebildete Silicon-Hydrogel-Kontaktlinse eine anteriore Oberfläche, die von der ersten Formgebungsfläche definiert wird, eine gegenüberliegende posteriore Oberfläche, die von der zweiten Formgebungsfläche definiert wird, und einen Linsenrand, der von der räumlichen Begrenzung der aktinischen Strahlung definiert wird, umfasst;
(4) Öffnen des Formwerkzeugs und Entnehmen der gebildeten Silicon-Hydrogel-Kontaktlinse aus dem Formwerkzeug;
(5) Entfernen des siliconhaltigen linsenbildenden Materials und anderer Komponenten der fluiden Zusammensetzung, die auf der ersten und der zweiten Formgebungsfläche des Formwerkzeugs zurückgeblieben sind, durch Waschen der ersten und der zweiten Formgebungsfläche des wiederverwendbaren Formwerkzeugs mit einer Lösung auf Wasserbasis, die von 0,01 Gew.-% bis 10 Gew.-% an einem Solvens-Tensid enthält, wobei das Solvens-Tensid ein Alkyl(propylenglycol)ₙ ether ist, wobei Alkyl eine lineare Alkylgruppe mit 2 bis 5 Kohlenstoffatomen ist und n die ganze Zahl 1, 2 oder 3 ist; und
(6) Wiederholen der Schritte (2) bis (5).

2. Verfahren gemäß Anspruch 1, wobei das Solvens-Tensid ein Alkyl(propylenglycol)ₙ ether ist, wobei Alkyl eine lineare Alkylgruppe mit 3 oder 4 Kohlenstoffatomen ist und n die ganze Zahl 1 oder 2 ist.

3. Verfahren gemäß Anspruch 1 oder 2, wobei das Solvens-Tensid ein Alkyl(propylenglycol)ₙ ether ist, wobei Alkyl lineares Butyl ist und n die ganze Zahl 1 ist, mit der chemischen Bezeichnung Propylenglycol-n-butylether.

4. Verfahren gemäß Anspruch 1 oder 2, wobei das Solvens-Tensid ein Alkyl(propylenglycol)ₙ ether ist, wobei Alkyl lineares Propyl ist und n die ganze Zahl 1 ist, mit der chemischen Bezeichnung Propylenglycol-n-propylether.

5. Verfahren gemäß Anspruch 1 oder 2, wobei das Solvens-Tensid ein Alkyl(propylenglycol)ₙ ether ist, wobei Alkyl lineares Butyl ist und n die ganze Zahl 2 ist, mit der chemischen Bezeichnung Dipropylenglycol-n-butylether.

6. Verfahren gemäß einem der Ansprüche 1 bis 5, wobei die fluide polymerisierbare Zusammensetzung ein siloxanhaltiges Vinylmonomer und ein/einen polysiloxanhaltiges/-haltigen Vinylmonomer oder Makromer oder Vernetzer umfasst.

7. Verfahren gemäß einem der Ansprüche 1 bis 6, wobei das siloxanhaltige Vinylmonomer N-[Tris(trimethyl-siloxy)silylpropyl](meth)acrylamid; N-[Tris(dimethylpropylsiloxy)silylpropyl](meth)acrylamid; N-[Tris(dimethylphenylsiloxy)silylpropyl]acrylamid; N-[Tris(dimethylphenylsiloxy) silylpropyl] (meth) acrylamid; N-[Tris(dimethylethylsiloxy)silylpropyl] (meth)acrylamid; N-(2-Hydroxy-3-(3-(bis (trimethylsilyloxy)methylsilyl)propyloxy)propyl)-2-methylacrylamid; N-(2-Hydroxy-3-(3-(bis(trimethylsilyloxy)methylsilyl)propyloxy)-propyl)acrylamid; N,N-Bis[2-hydroxy-3-(3-(bis(trimethylsilyloxy)methylsilyl)propyloxy)propyl]-2-methylacrylamid; N,N-Bis[2-hydroxy-3-(3-(bis(trimethylsilyloxy)methylsilyl)propyloxy)-propyl]acrylamid; N-(2-Hydroxy-3-(3-(tris(trimethylsilyloxy)silyl)propyloxy)propyl)-2-methylacrylamid; N-(2-Hydroxy-3-(3-(tris(trimethylsilyloxy)silyl)propyloxy)propyl)acrylamid; N,N-Bis[2-hydroxy-3-(3-(tris(trimethylsilyloxy)silyl)propyloxy)propyl]-2-methylacrylamid; N,N-Bis[2-hydroxy-3-(3-(tris(trimethylsilyloxy)silyl)propyloxy) propyl]acrylamid; N-[2-Hydroxy-3-(3-(t-butyldimethylsilyl)propyloxy)propyl]-2-methylacrylamid; N-[2-Hydroxy-3-(3-(t-butyldimethylsilyl)propyloxy) propyl]acrylamid; N,N-Bis[2-hydroxy-3-(3-(t-butyldimethylsilyl)propyloxy)propyl]-2-methylacrylamid; N,N-Bis[2-hydroxy-3-(3-(t-butyldimethylsilyl) propyloxy)propyl]acrylamid; 3-Methacryloxypropylpentamethyldisiloxan; Tris(trimethylsilyloxy) silylpropylmethacrylat (TRIS); (3-Methacryloxy-2-hydroxypropyloxy)propylbis(trimethylsiloxy)-methylsilan); (3-Methacryloxy-2-hydroxypropyloxy) propyltris(trimethylsiloxy)silan; 3-Methacryloxy-2-(2-hydroxyethoxy)propyloxy)propylbis(trimethylsiloxy)methylsilan; N-2-Methacryloxyethyl-O-(methylbistrimethylsiloxy-3-propyl)silylcarbamat; 3-(Trimethylsilyl)propylvinylcarbonat, 3-(Vinyloxycarbonylthio)propyltris(trimethylsiloxy)silan; 3-[Tris(trimethylsiloxy)silyl]propylvinylcarbamat; 3-[Tris(trimethylsiloxy)silyl]propylallylcarbamat; 3-[Tris(trimethylsiloxy)silyl]propylvinylcarbonat; t-Butyldimethylsiloxyethylvinylcarbonat; Trimethylsilylethylvinylcarbonat; Trimethylsilylmethylvinylcarbonat); oder eine Kombination davon ist.

8. Verfahren gemäß einem der Ansprüche 1 bis 7, wobei das siloxanhaltige Vinylmonomer N-[Tris(trimethylsiloxy)silylpropyl](meth)acrylamid, Tris(trimethyl silyloxy)silylpropylmethacrylat, 3-Methacryloxy-2-hydroxypropyloxy)propylbis(trimethylsiloxy)-methylsilan oder eine Kombination davon ist.

9. Verfahren gemäß einem der Ansprüche 1 bis 8, wobei die fluide polymerisierbare Zusammensetzung ein aktinisch vernetzbares siliconhaltiges Prepolymer umfasst.

10. Verfahren gemäß einem der Ansprüche 1 bis 9, wobei wenigstens eine von der ersten und der zweiten Formgebungsfläche für eine vernetzende Strahlung durchlässig ist.

11. Verfahren gemäß Anspruch 10, wobei das wiederverwendbare Formwerkzeug eine Maske umfasst, die in, an oder auf der Formhälfte, die die strahlendurchlässige Formgebungsfläche aufweist, befestigt, gestaltet oder angeordnet ist.

12. Verfahren gemäß einem der Ansprüche 1 bis 11, wobei die fluide, polymerisierbare Zusammensetzung ein hydrophiles Vinylmonomer ausgewählt aus der Gruppe bestehend aus N,N-Dimethylacrylamid (DMA), N,N-Dimethylmethacrylamid (DMMA), 2-Acrylamidoglycolsäure, 3-Acryloylamino-l-propanol, N-Hydroxyethylacrylamid, N-[Tris(hydroxymethyl) methyl]acrylamid, N-Methyl-3-methylen-2-pyrrolidon, 1-Ethyl-3-methylen-2-pyrrolidon, 1-Methyl-5-methylen-2-pyrrolidon, 1-Ethyl-5-methylen-2-pyrrolidon, 5-Methyl-3-methylen-2-pyrrolidon, 5-Ethyl-3-methylen-2-pyrrolidon, 1-n-Propyl-3-methylen-2-pyrrolidon, 1-n-Propyl-5-methylen-2-pyrrolidon, 1-Isopropyl-3-methylen-2-pyrrolidon, 1-Isopropyl-5-methylen-2-pyrrolidon, 1-n-Butyl-3-methylen-2-pyrrolidon, 1-tert-Butyl-3-methylen-2-pyrrolidon, 2-Hydroxyethylmethacrylat (HEMA), 2-Hydroxyethylacrylat (HEA), Hydroxypropylacrylat, Hydroxypropylmethacrylat (HPMA), Trimethylammonium-2-hydroxypropylmethacrylathydrochlorid, Aminopropylmethacrylathydrochlorid, Dimethylaminoethylmethacrylat (DMAEMA), Glycerolmethacrylat (GMA), N-Vinyl-2-pyrrolidon (NVP), Allylalkohol, Vinylpyridin, ein C₁-C₄-Alkoxypolyethylenglycol(meth)acrylat mit einem gewichtsgemittelten Molekulargewicht bis zu 1500, Methacrylsäure, N-Vinylformamid, N-Vinylacetamid, N-Vinylisopropylamid, N-Vinyl-N-methylacetamid, N-Vinylcaprolactam und Gemischen davon umfasst.

13. Verfahren gemäß einem der Ansprüche 1 bis 12, wobei die fluide, polymerisierbare Zusammensetzung ein oder mehrere hydrophobe Komfortmittel ausgewählt aus der Gruppe bestehend aus Phospholipid, Monoglycerid, Diglycerid, Triglycerid, Glycolipid, Glyceroglycolipid, Sphingolipid, Sphingoglycolipid, Fettalkohol, Kohlenwasserstoff mit einer C₁₂-C₂₈-langen Kette, Wachsester, Fettsäure, Mineralöl, Siliconöl und Kombinationen davon umfasst.

14. Verfahren gemäß einem der Ansprüche 1 bis 13, wobei die fluide, polymerisierbare Zusammensetzung Polyglycolsäure und/oder ein nichtvernetzbares hydrophiles Polymer mit einem gewichtsgemittelten Molekulargewicht M_{w} von 5.000 bis 1.500.000, bevorzugter von 50.000 bis 1.200.000, noch bevorzugter von 100.000 bis 1.000.000, Dalton umfasst.

15. Verfahren gemäß einem der Ansprüche 1 bis 14, wobei die fluide, polymerisierbare Zusammensetzung ein bioaktives Mittel ausgewählt aus der Gruppe bestehend aus Rebamipid, Ketotifen, Olaptidin, Cromoglycolat, Cyclosporin, Nedocromil, Levocabastin, Lodoxamid, Ketotifen, 2-Pyrrolidon-5-carbonsäure, Glycolsäure, Milchsäure, Apfelsäure, Weinsäure, Mandelsäure, Citronensäure, Linolsäure, gamma-Linolsäure, Vitaminen und dem pharmazeutisch verträglichen Salz davon und Kombinationen davon umfasst.

## Revendications

1. Procédé pour la production de lentilles de contact en hydrogel de silicone, comprenant les étapes consistant à :
(1) fournir un moule réutilisable pour la fabrication de lentilles de contact souples, le moule ayant une première moitié de moule présentant une première surface de moulage définissant la surface antérieure d'une lentille de contact et une seconde moitié de moule présentant une seconde surface de moulage définissant la surface postérieure de la lentille de contact, lesdites première et seconde moitiés de moule étant conçues pour se recevoir mutuellement de façon telle qu'une cavité est formée entre lesdites première et seconde surfaces de moulage ;
(2) introduire une composition polymérisable fluide dans la cavité, la composition polymérisable fluide comprenant au moins une matière de formation de lentille contenant une silicone choisie dans le groupe constitué par un monomère vinylique contenant un siloxane, un monomère vinylique contenant un polysiloxane, un macromère contenant un polysiloxane, un agent de réticulation contenant un polysiloxane, un prépolymère contenant une silicone réticulable par voie actinique et un mélange de ceux-ci ;
(3) exposer à un rayonnement, sous une limitation spatiale du rayonnement actinique, la composition fluide dans le moule pendant une durée inférieure ou égale à 200 secondes, de manière à former une lentille de contact en hydrogel de silicone, la lentille de contact en hydrogel de silicone formée comprenant une surface antérieure définie par la première surface de moulage, une surface postérieure opposée définie par la seconde surface de moulage et un bord de lentille défini par la limitation spatiale du rayonnement actinique ;
(4) ouvrir le moule et retirer du moule la lentille de contact en hydrogel de silicone formée ;
(5) retirer la matière de formation de lentille contenant une silicone et d'autres constituants de la composition fluide restant sur les première et seconde surfaces de moulage du moule par lavage des première et seconde surfaces de moulage du moule réutilisable avec une solution à base d'eau contenant de 0,01 % à 10 % en poids d'un solvo-tensioactif, le solvo-tensioactif étant un éther d'alkyle et de (propylèneglycol)ₙ dans lequel l'alkyle est un groupe alkyle linéaire ayant 2 à 5 atomes de carbone et n est le nombre entier 1, 2 ou 3 ; et
(6) répéter les étapes (2) à (5).

2. Procédé selon la revendication 1, dans lequel le solvo-tensioactif est un éther d'alkyle et de (propylèneglycol)ₙ dans lequel l'alkyle est un groupe alkyle linéaire ayant 3 ou 4 atomes de carbone et n est le nombre entier 1 ou 2.

3. Procédé selon la revendication 1 ou 2, dans lequel le solvo-tensioactif est un éther d'alkyle et de (propylèneglycol)ₙ dans lequel l'alkyle est le groupe butyle linéaire et n est le nombre entier 1 ayant le nom chimique propylèneglycol-n-butyléther.

4. Procédé selon la revendication 1 ou 2, dans lequel le solvo-tensioactif est un éther d'alkyle et de (propylèneglycol)ₙ dans lequel l'alkyle est le groupe propyle linéaire et n est le nombre entier 1 ayant le nom chimique propylèneglycol-n-propyléther.

5. Procédé selon la revendication 1 ou 2, dans lequel le solvo-tensioactif est un éther d'alkyle et de (propylèneglycol)ₙ dans lequel l'alkyle est le groupe butyle linéaire et n est le nombre entier 2 ayant le nom chimique dipropylèneglycol-n-butyléther.

6. Procédé selon l'une quelconque des revendications 1 à 5, dans lequel la composition polymérisable fluide comprend un monomère vinylique contenant un siloxane et un monomère vinylique ou macromère ou agent de réticulation contenant un polysiloxane.

7. Procédé selon l'une quelconque des revendications 1 à 6, dans lequel le monomère vinylique contenant un siloxane est le *N*-[tris(triméthylsiloxy)silylpropyl] (méth)acrylamide, le *N*-[tris(diméthylpropylsiloxy)silylpropyl](méth)acrylamide, le *N*-[tris(diméthylphénylsiloxy)silylpropyl]acrylamide, le *N*-[tris(diméthylphénylsiloxy)silylpropyl](méth)acrylamide, le *N*-[tris (diméthyléthylsiloxy)silylpropyl] (méth)acrylamide, le *N-(2-*hydroxy-3-(3-(bis(triméthylsilyloxy)méthylsilyl)propyloxy)propyl)-2-méthylacrylamide ; le *N*-(2-hydroxy-3-(3-(bis(triméthylsilyloxy)méthylsilyl)propyloxy)propyl)-acrylamide ; le *N*,*N*-bis[2-hydroxy-3-(3-(bis(triméthylsilyloxy)méthylsilyl)propyloxy)propyl]-2-méthylacrylamide ; le *N,N*-bis[2-hydroxy-3-(3-(bis(triméthylsilyloxy)méthylsilyl)propyloxy)propyl]-acrylamide ; le *N*-(2-hydroxy-3-(3-(tris(triméthylsilyloxy)silyl)propyloxy)propyl)-2-méthylacrylamide ; le *N*-(2-hydroxy-3-(3-(tris(triméthylsilyloxy)silyl)propyloxy)propyl)-acrylamide ; le *N*,*N*-bis[2-hydroxy-3-(3-(tris(triméthylsilyloxy)silyl)propyloxy)propyl]-2-méthylacrylamide ; le *N,N*-bis[2-hydroxy-3-(3-(tris(triméthylsilyloxy) silyl)propyloxy)propyl]-acrylamide ; le *N*-[2-hydroxy-3-(3-(*t*-butyldiméthylsilyl)propyloxy)propyl]-2-méthylacrylamide ; le *N*-[2-hydroxy-3-(3-(*t*-butyldiméthylsilyl)propyloxy)propyl]acrylamide ; le *N,N-*bis[2-hydroxy-3-(3-(*t*-butyldiméthylsilyl)propyloxy)propyl]-2-méthylacrylamide ; le N,N-bis[2-hydroxy-3-(3-(*t-*butyldiméthylsilyl)propyloxy)propyl]acrylamide ; le 3-méthacryloxypropylpentaméthyldisiloxane, le méthacrylate de tris(triméthylsilyloxy)silylpropyle (TRIS), le (3-méthacryloxy-2-hydroxypropyloxy)propylbis (triméthylsiloxy)méthylsilane, le (3-méthacryloxy-2-hydroxypropyloxy)propyltris(triméthylsiloxy)silane, le 3-méthacryloxy-2-(2-hydroxyéthoxy)propyloxy)propylbis-(triméthylsiloxy)méthylsilane, le carbamate *de N*-2-méthacryloxyéthyl-O-(méthylbistriméthylsiloxy-3-propyl) silyle, le carbonate de 3-(triméthylsilyl)propyle et de vinyle, le 3-(vinyloxycarbonylthio)propyltris(triméthylsiloxy)silane, le carbamate de 3-[tris(triméthylsiloxy) silyl]propylvinyle, le carbamate de 3-[tris(triméthylsiloxy)silyl]propylallyle, le carbonate de 3-[tris(triméthylsiloxy)silyl]propyle et de vinyle, le carbonate de *t*-butyldiméthylsiloxyéthyle et de vinyle ; le carbonate de triméthylsilyléthyle et de vinyle, le carbonate de triméthylsilylméthyle et de vinyle ou des associations de ceux-ci.

8. Procédé selon l'une quelconque des revendications 1 à 7, dans lequel le monomère vinylique contenant un siloxane est le *N*-[tris(triméthylsiloxy)silylpropyl] (méth)acrylamide, le méthacrylate de tris(triméthylsilyloxy)silylpropyle, le 3-méthacryloxy-2-hydroxypropyloxy)propylbis(triméthylsiloxy)méthylsilane ou des associations de ceux-ci.

9. Procédé selon l'une quelconque des revendications 1 à 8, dans lequel la composition polymérisable fluide comprend un prépolymère contenant une silicone réticulable par voie actinique.

10. Procédé selon l'une quelconque des revendications 1 à 9, dans lequel au moins l'une des première et seconde surfaces de moulage est perméable à un rayonnement de réticulation.

11. Procédé selon la revendication 10, dans lequel le moule réutilisable comprend un masque qui est fixé, construit ou disposé dans ou sur la moitié de moule ayant la surface de moulage perméable à un rayonnement ou au niveau de celle-ci.

12. Procédé selon l'une quelconque des revendications 1 à 11, dans lequel la composition polymérisable fluide comprend un monomère vinylique hydrophile choisi dans le groupe constitué par le *N*,*N*-diméthylacrylamide (DMA), le *N*,*N*-diméthylméthacrylamide (DMMA), l'acide 2-acrylamidoglycolique, le 3-acryloylamino-1-propanol, le N-hydroxyéthylacrylamide, le *N*-[tris(hydroxyméthyl) méthyl]acrylamide, la *N*-méthyl-3-méthylène-2-pyrrolidone, la 1-éthyl-3-méthylène-2-pyrrolidone, la 1-méthyl-5-méthylène-2-pyrrolidone, la 1-éthyl-5-méthylène-2-pyrrolidone, la 5-méthyl-3-méthylène-2-pyrrolidone, la 5-éthyl-3-méthylène-2-pyrrolidone, la 1-*n*-propyl-3-méthylène-2-pyrrolidone, la 1-*n*-propyl-5-méthylène-2-pyrrolidone, la 1-isopropyl-3-méthylène-2-pyrrolidone, la 1-isopropyl-5-méthylène-2-pyrrolidone, la 1-*n*-butyl-3-méthylène-2-pyrrolidone, la 1-*tert-*butyl-3-méthylène-2-pyrrolidone, le méthacrylate de 2-hydroxyéthyle (HEMA), l'acrylate de 2-hydroxyéthyle (HEA), l'acrylate d'hydroxypropyle, le méthacrylate d'hydroxypropyle (HPMA), le chlorhydrate de (méthacrylate de 2-hydroxypropyle)triméthylammonium, le chlorhydrate de méthacrylate d'aminopropyle, le méthacrylate de diméthylaminoéthyle (DMAEMA), le méthacrylate de glycérol (GMA), la *N*-vinyl-2-pyrrolidone (NVP), l'alcool allylique, la vinylpyridine, un (méth)acrylate d'alcoxy en C₁-C₄-polyéthylèneglycol ayant une masse moléculaire moyenne en poids allant jusqu'à 1500, l'acide méthacrylique, le *N*-vinylformamide, le *N*-vinylacétamide, le *N-*vinylisopropylamide, le *N*-vinyl-*N*-méthylacétamide, le *N*-vinylcaprolactame et les mélanges de ceux-ci.

13. Procédé selon l'une quelconque des revendications 1 à 12, dans lequel la composition polymérisable fluide comprend un ou plusieurs agents de confort hydrophobes choisis dans le groupe constitué par un phospholipide, un monoglycéride, un diglycéride, un triglycéride, un glycolipide, un glycéroglycolipide, un sphingolipide, un sphingoglycolipide, un alcool gras, un hydrocarbure ayant une chaîne en C₁₂-C₂₈ de longueur, un ester de paraffine, un acide gras, une huile minérale, une huile de silicone et les associations de ceux-ci.

14. Procédé selon l'une quelconque des revendications 1 à 13, dans lequel la composition polymérisable fluide comprend du poly(acide glycolique) et/ou un polymère hydrophile non réticulable ayant une masse moléculaire moyenne en poids M_{w} de 5 000 à 1 500 000, plus préférablement de 50 000 à 1 200 000, plus préférablement même encore de 100 000 à 1 000 000, Daltons.

15. Procédé selon l'une quelconque des revendications 1 à 14, dans lequel la composition polymérisable fluide comprend un agent bioactif choisi dans le groupe constitué par le rébamipide, le kétotifène, l'olaptidine, le cromoglycolate, la cyclosporine, le nédocromil, la lévocabastine, le lodoxamide, le kétotifène, l'acide 2-pyrrolidone-5-carboxylique, l'acide glycolique, l'acide lactique, l'acide malique, l'acide tartrique, l'acide mandélique, les acides citriques, l'acide linoléique, l'acide gamma-linoléique, les vitamines et les sels pharmaceutiquement acceptables et associations de ceux-ci.
